# EUROPEAN PATENT APPLICATION

(11) **EP 4 592 022 A2**
(43) Date of publication of application: **30.07.2025**
(21) Application number: 25152930.1
(22) Date of filing: 20.01.2025
(51) Int. Cl.: B23P 6/00, F01D 5/00, B22F 7/06, B23K 26/342

(54) **HYBRID ADDITIVE MANUFACTURING REPAIR WITH POWDER BED FUSION FEATURE AND DIRECTED ENERGY DEPOSITION JOINING**

(30) Priority: 26.01.2024 US 202418424369
(71) Applicant: RTX Corporation, Farmington, CT 06032 (US)
(72) Inventor: GUSTAFSON, Brendan, Farmington, 06032 (US); BREITZMANN, Peter, Farmington, 06032 (US)
(74) Representative: Dehns

(57) **Abstract**

A method of weld repairing an original part (28) includes inspecting the original part (28) to identify a worn or defective feature requiring repair, removing from the original part (28) the worn or defective feature requiring repair, fabricating a replacement feature (26), joining the replacement feature (26) to the original part (28) to complete a desired repair, and returning the original part (28) to service after completion of the desired repair. The replacement part is made with a powder beam fusion (PBF) technique. The replacement feature (26) is joined to the original part (28) using a directed energy deposition (DED) joining technique. The original part (28) and replacement feature (26) are made from a base material. The DED joining technique uses the base material to join the replacement feature (26) to the original part.

## Description

The present disclosure relates generally to repair of components and, more particularly, to an approach for combining additive manufacturing techniques to accomplish a repair.

It is often desirable to repair components used in a variety of applications, include aircraft propulsion applications, after they have suffered operations-related wear or damage due to use in the environments for which they were intended. While a variety of repair techniques are available, not all such components can be repaired using currently known techniques.

### SUMMARY

One aspect of this disclosure is directed to a method of weld repairing an original part including inspecting the original part to identify a worn or defective feature requiring repair, removing from the original part the worn or defective feature requiring repair, fabricating a replacement feature, joining the replacement feature to the original part to complete a desired repair, and returning the original part to service after completion of the desired repair. The replacement part is made with a powder beam fusion (PBF) technique. The replacement feature is joined to the original part using a directed energy deposition (DED) joining technique The original part and replacement feature are made from a base material. The DED joining technique uses the base material to join the replacement feature to the original part

Another aspect of this disclosure is directed to an original part repaired using a hybrid repair process. The original part made from a base material and a replacement feature made using a powder beam fusion (PBF) technique from the base material is joined to the original part using a directed energy deposition (DED) joining technique.

### BRIEF DESCRIPTION OF THE DRAWINGS

Fig. 1 is a schematic representation of a gas turbine engine stator vane ring.
Fig. 2 is a schematic representation of a part repaired with the method of this disclosure.
Fig. 3 is a flowchart of the repair process of the present disclosure.

### DETAILED DESCRIPTION

While a wide variant of repair techniques are available for components that have suffered operations-related wear or damage due to use in the environments for which they were intended, not all components can be repaired using currently know techniques. Currently there is a focus on using various additive manufacturing (AM) techniques to perform repairs. For example, when a repair involves removal and replacement of material, the replacement material can be made using powder bed fusion (PBF) techniques such a powder bed fusion-laser (PBF-L) or powder bed fusion-electron beam (PBF-EB). One advantage of making replacement material with PBF techniques is that the replacement material can be made to near net shape such that the replacement material may, at most, require only limited machining before use.

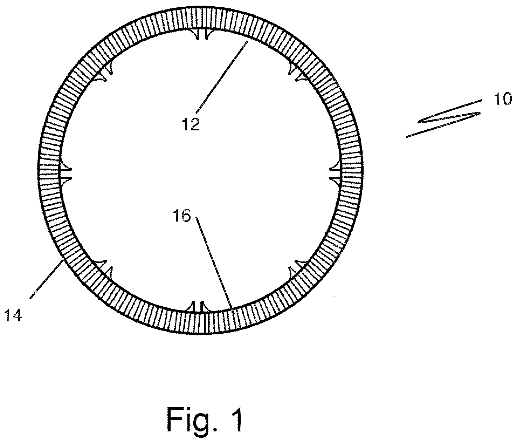

As a non-limiting example, Fig. 1 shows a stator ring **10** from a gas turbine engine (not shown). As known in the art gas turbine engines use stator rings to direct airflow through the gas turbine engine compressor and turbine sections (not shown). The stator ring **10** includes an inner ring **12** and outer ring **14** and a plurality of stator vanes **16** distributed around the circumference of the stator ring **10** and attached to the inner ring **12** and outer ring **14.** As known in the art, each of the stator vanes **16** has an airfoil shape selected to guide airflow across the stator ring **10.**

During operation in a gas turbine engine individual stator vanes **16** in the stator ring **10** can wear or otherwise suffer damage that requires repair. While there can be several options for repair individual stator vanes **16** depending on the extent of repair required, one option is to remove the individual stator vane **16** from the stator ring **10** and replace the stator vane **16** with a replacement stator vane **16.** The replacement stator vane **16** can be made using PBF techniques. While the specific PBF technique for making a replacement stator vane **16** is outside the scope of this disclosure, a person of ordinary skill will know how to select and implement appropriate PBF techniques to accomplish this task. This disclosure will focus on a method of attaching the replacement stator vane **16** made by PBF techniques to the stator ring **10** using direct energy deposition (DED) process. This combination of AM manufacturing using PBF techniques with AM joining techniques using DED techniques allows the benefits of both techniques to be combined to accomplish a quality repair.

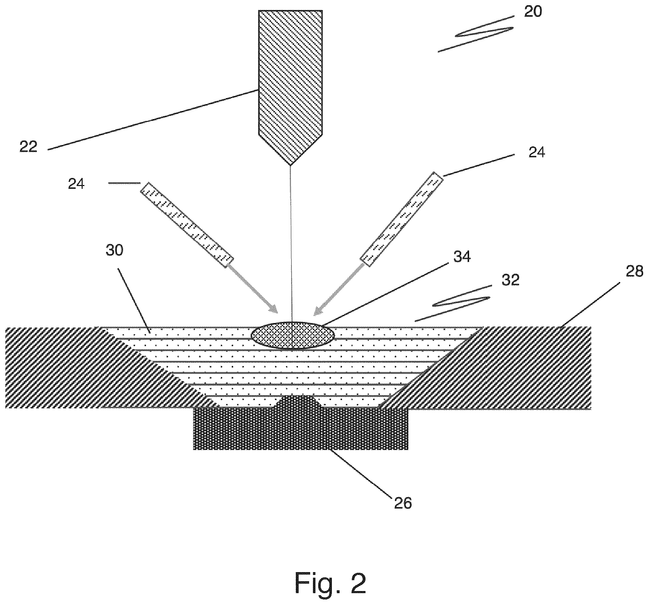

As shown in Fig. 2, DED joining system **20** uses a DED energy source **22** and DED powder distributors **24** to join a PBF replacement feature **26** to an original part **28.** Although the process of this disclosure is introduced in the context of joining a replacement stator vane **16** to a stator ring **10** as describe above, Fig. 2 uses a more generic approach to emphasize the broad applicability of the disclosed repair method. As such, the PBF replacement feature **26** and the original part **28** can be any combination of parts for which the disclosed process would be useful. For example, the original part **28** can be a gas turbine engine case (not shown) and the PBF replacement feature **26** can be a boss, flange or other element of a gas turbine engine case that may need to be removed and replaced. A person of ordinary skill will recognize that many other combinations of PBF replacement feature **26** and the original part **28** can be used with the disclosed repair method.

A person of ordinary skill will recognize that the materials used for the PBF replacement feature **26** and the original part **28** can be any of the materials typically used for the applications for which the original part **28** is intended. For example, if the original part **28** is used in a gas turbine application, the base material used to make the original part **28** can be a titanium material for cold section (e.g., compressor) applications (see Table 1 for nonlimiting examples), a superalloy material for hot section (e.g., combustor and turbine) and disk applications (See Table 2 for nonlimiting examples), or specialty steels for other applications (e.g., shafts) (See Table 3 for nonlimiting examples). In most applications, the PBF replacement feature **26** will be made from the same base material as the original part **28** in a powder form that is useable with the PBF technique used to make the PBF replacement feature **26.** A person of ordinary skill will recognize that other materials can be used as the base material for the parts and method of this disclosure.

**Table 1: Selected Titanium Alloys**

| **Grade designation** | **Nominal chemical composition** |
|---|---|
| Ti64 | Ti-6Al-4V |
| Ti811 | Ti-8Al-1Mo-1V |
| Ti1100 | Ti-6Al-2.8Sn-4Zr-0.4Mo-0.4Si |
| Ti6242 | Ti-6Al-2Sn-4Zr-2Mo |
| Ti6242S | Ti-6Al-2Sn-4Zr-2Mo-0.2Si |

**Table 2: Selected Superalloys**

| **Grade designation** | **Nominal chemical composition** |
|---|---|
| Hastelloy X | Ni22Cr1.5Co1.9Fe0.7W9Mo0.07C0.005B |
| IN 100 | 60Ni10Cr15Co3Mo4.7Ti5.5Al0.15C 0.015B0.06Zr1.0V |
| IN 625 | 58.8Ni21.5Cr9Mo5Fe3.65Ni0.5Al0.5Ti0.05C0.5Mn0.5Si0.015S0.015P |
| IN 713 | 74.2Ni12.5Cr4.2Mo2Nb0.8Ti6.1Al0.1Zr0.12C0.01B |
| IN 718 | 53Ni19Cr18.5Fe3Mo0.9Ti0.5A15.1Cb 0.03C |
| IN 738 | 61.5Ni16Cr8.5Co1.75Mo2.6W1.75Ta0.9Nb3.4Ti3.4Al0.04Zr0.11C0.01B |
| IN 792 | 60.8Ni12.7Cr9Co2Mo3.9W3.9Ta4.2Ti3.2Al0.1Zr0.21C0.02B |
| Rene 41 | 56Ni19Cr10.5Co9.5Mo3.2Ti1.7Al0.01Zr0.08C0.005B |
| Rene 77 | 53.5Ni15Cr18.5Co5.2Mo3.5Ti4.25Al0.08C0.015B |
| Rene 80 | 60.3Ni14Cr9.5Co4Mo4W5Ti3al0.03Zr0.17C0.015B |
| Rene 80+Hf | 59.8Ni14Cr9.5Co4Mo4W0.8Hf4.7Ti3Al0.01Zr0.15C0.015B |
| Rene88 DT | 56.4Ni16cr13Co4Mo4W0.7Nb3.7Ti 2.1Al0.03C0.015B0.03Zr |
| Rene 95 | 61Ni14Cr8Co3.5Mo3.5W3.5Nb2.5Ti3.5Al 0.16C0.01B0.05Zr |
| Rene 100 | 62.6Ni9.5Cr15Co3Mo4.2Ti5.5Al0.06Zr0.15C0.015B |
| MERL-76 | 54.4Ni12.4Cr18.6co3.3Mo1.4Nb4.3Ti5.1Al0.02C0.03B0.35Hf0.06Zr |
| Udimet 720 | 55Ni18Cr14.8Co3Mo1.25W5Ti2.5Al0.035C 0.033B0.03Zr |
| Udimet 720LI | 57Ni16Cr15Co3Mo1.25W5Ti2.5Al0.025C0. 018B0.03Zr |
| MAR-M200 | 59.5Ni9Cr10Co12.5W1.8Nb2Ti5Al0.05Zr0.15C0.015B |
| MAR-M200+Hf | Ni8Cr9Co12W2Hf1Nb1.9Ti5.0Al0.03Zr0.13C0.015B |
| MAR-M246 | 59.8Ni9Cr10Co2.5Mo10W1.5Ta1.5Ti5.5.Al0.05Zr0.14C0.015B |
| MAR-M246+Hf | Ni9Cr10Co2.5Mo10W1.5Hfl1.5Ta1.5Ti5.5Al0.05Zr0.15C0.015B |
| Udimet 700 | 59Ni14.3Cr14.5Co4.3Mo3.5Ti4.3Al0.02Zr0.08C0.015B |
| Udimet 710 | 54.8Ni18Cr15Co3Mo1.5W2.5Ti5Al0.08Zr0.13C |
| Waspaloy | 58Ni19Cr13Co4Mo3Ti1.4Al |

**Table 3: Selected Specialty Steels**

| **Grade designation** | **Nominal chemical composition** |
|---|---|
| CrMoV steel | Fe1Cr0.5Ni1.25Mo0.25V0.30C |
| M152 | Fe12Cr2.5Ni1.7Mo0.3V0.12C |

Continuing with Fig. 2, PBF replacement feature **26** is joined to original part **28** with layers **30** of DED material deposited into the joint **32** between the PBF replacement feature **26** and the original part **28.** The DED material is deposited as a powder into the joint **32** using DED powder distributors **24.** The DED material can be of any composition deemed suitable to join the PBF replacement feature **26** to the original part **28** and may be the same material as the base material used for the PBF replacement feature **26** to the original part **28.** The properties of the DED material powder (e.g., particle size distribution, etc.) can be any such properties consistent with join the PBF replacement feature **26** to the original part **28.** The DED layers **30** are formed when DED energy source **22** provides energy to create a melt pool **34** that melts the DED material powder, which later solidifies to form each DED layer **30.** The DED energy source **22** can be a laser, an electron beam gun, or any other energy source capable of melting the DED material powder to form the melt pool **34.** A person of ordinary skill will know how to select the amount of energy produced by the DED energy source **22** to raise the DED material powder to a temperature sufficient to form the melt pool **34.** In addition, a person of ordinary skill will know how to control the DED energy source **22** to raster or scan over the DED material powder to form the melt pool **34** across the length and width of each of the DED layers **30.**

During the process described above, no portion of the PBF replacement feature **26** or the original part **28** is subject to melting as would be the case with a weld repair. As a result, use of the DED layers **30** to join the PBF replacement feature **26** to the original part **28** reduces the formation of a heat affected zone (HAZ) in the j oint **32** compared to welding or other joining techniques. Reducing or eliminating formation of a HAZ in the j oint **32** can lead to less cracking that can result in material failure when the repaired part is placed back into service.

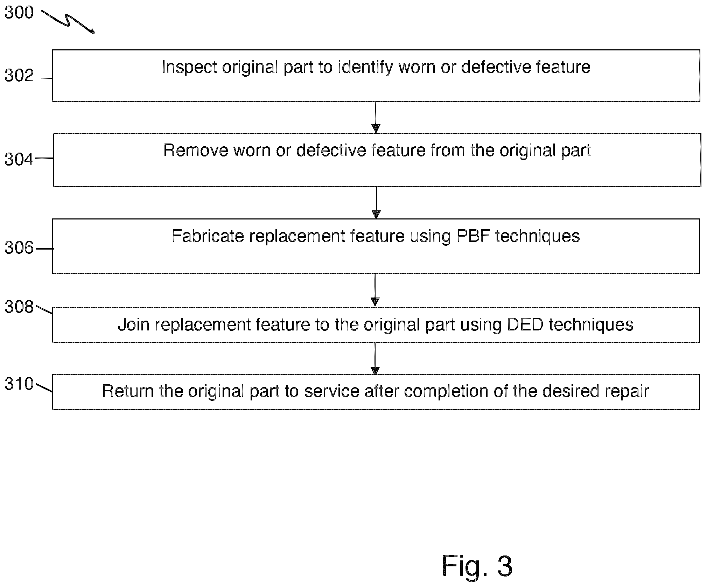

Fig. 3 is a flowchart of the overall repair procedure **300** of this disclosure. At step **302,** the original part **28** is inspected to identify whether repair is required and, if so, worn or defective features that need to be replaced. At step **304,** the worn or defective features that need to be replaced are removed from the original part. Removal can be accomplished using any appropriate technique including cutting with a saw or abrasive material, wire electro-discharge machining (EDM) techniques or other appropriate removal techniques. At step **306,** a replacement feature **26** is made using appropriate techniques, including PBF techniques as described above. At step **308,** the replacement feature **26** is joined to the original part **28** using DED joining techniques as described above. Finally, at step **310** the original part is returned to service after completion of the desired repair. A person of ordinary skill will know how to perform each of these steps based upon the present disclosure and knowledge of manufacturing processes.

Using the hybrid repair technique described in this disclosure, i.e., fabricating a replacement feature **26** using PBF techniques and joining the replacement feature **26** to the original part **28** using DED joining techniques, can reduce the scrap rate of the original part **28** by reducing the number of worn or defective features that are outside of allowable repair limits. Rather, replacement features **26** can be fabricated using PBF techniques and joined to the original part **28** without creating an undesirable HAZ in either the replacement feature **26** or original part **28.** This result is particularly important if the joint between the replacement feature **26** and original part **28** is located at a "critical" location (i.e., a location at which later part failure can lead to a safety issue or other serious operational issue), such as within a gas flow path in a gas turbine engine.

### Discussion of Possible Embodiments

The following are non-exclusive descriptions of possible embodiments of the present invention.

A method of weld repairing an original part includes inspecting the original part to identify a worn or defective feature requiring repair, removing from the original part the worn or defective feature requiring repair, fabricating a replacement feature, joining the replacement feature to the original part to complete a desired repair, and returning the original part to service after completion of the desired repair. The replacement part is made with a powder beam fusion (PBF) technique. The replacement feature is joined to the original part using a directed energy deposition (DED) joining technique The original part and replacement feature are made from a base material. The DED joining technique uses the base material to join the replacement feature to the original part

The method of the preceding paragraph can optionally include any one or more of the following features, configurations and/or additional elements:
The method of the preceding paragraph, wherein the base material comprises a titanium alloy, a superalloy material, or a specialty steel alloy.

The method of any of the preceding paragraphs, wherein the PBF technique is either PBF-laser or PBF-electron beam.

The method of any of the preceding paragraphs, wherein the DED joining technique uses a laser or electron beam as a DED energy source.

The method of any of the preceding paragraphs, wherein the original part, the worn or defective feature, and the replacement feature are components of a gas turbine engine.

The method of the preceding paragraph, wherein the original part is a stator vane ring and the worn or defective part and the replacement feature are a stator vane.

The method of the preceding paragraph, wherein the original part is a gas turbine engine casing and the worn or defective part and the replacement feature are a boss for a gas turbine engine casing.

An original part repaired using a hybrid repair process comprises the original part made from a base material and a replacement feature made using a powder beam fusion (PBF) technique from the base material, wherein the replacement feature is joined to the original part using a directed energy deposition (DED) joining technique.

The original part of the preceding paragraph can optionally include any one or more of the following features, configurations and/or additional elements:
The original part of the preceding paragraph, wherein the base material comprises a titanium alloy, a superalloy material, or a specialty steel alloy.

The original part of any of the preceding paragraphs, wherein the PBF technique is either PBF-laser or PBF-electron beam.

The original part of any of the preceding paragraphs, wherein the original part and the replacement feature are components of a gas turbine engine.

The original part of the preceding paragraphs, wherein the original part is a stator vane ring and the replacement feature are a stator vane.

The original part of the preceding paragraphs, wherein the original part is a gas turbine engine casing the replacement feature are a boss for a gas turbine engine casing.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of weld repairing an original part (28), comprising:
inspecting the original part (28) to identify a worn or defective feature requiring repair, wherein the original part (28) is made from a base material;
removing from the original part (28) the worn or defective feature requiring repair;
fabricating, using a powder beam fusion (PBF) technique, a replacement feature (26), wherein the replacement feature (26) is made from the base material;
joining, using a directed energy deposition (DED) joining technique, the replacement feature (26) to the original part (28) to complete a desired repair, wherein the DED joining technique uses the base material to join the replacement feature (26) to the original part (28);
returning the original part (28) to service after completion of the desired repair.

2. The method of claim 1, wherein the base material comprises a titanium alloy, a superalloy material, or a specialty steel alloy.

3. The method of claim 1 or 2, wherein the PBF technique is either PBF-laser or PBF-electron beam.

4. The method of claim 1, 2 or 3, wherein the DED joining technique uses a laser or electron beam as a DED energy source (22).

5. The method of any preceding claim, wherein the original part (28), the worn or defective feature, and the replacement feature (26) are components of a gas turbine engine.

6. The method of claim 5, wherein the original part (28) is a stator vane ring (10) and the worn or defective part and the replacement feature (26) are a stator vane (16).

7. The method of claim 5, wherein the original part (28) is a gas turbine engine casing and the worn or defective part and the replacement feature (26) are a boss for a gas turbine engine casing.

8. An original part (28) repaired using a hybrid repair process, the original part (28) comprising:
the original part (28) made from a base material; and
a replacement feature (26) made using a powder beam fusion (PBF) technique from the base material, wherein the replacement feature (26) is joined to the original part (28) using a directed energy deposition (DED) joining technique.

9. The part (28) of claim 8, wherein the base material comprises a titanium alloy, a superalloy material, or a specialty steel alloy.

10. The part (28) of claim 8 or 9, wherein the PBF technique is either PBF-laser or PBF-electron beam.

11. The part (28) of claim 8, 9 or 10, wherein the original part (28) and the replacement feature (26) are components of a gas turbine engine.

12. The part (28) of claim 11, wherein the original part (28) is a stator vane ring (10) and the replacement feature (26) are a stator vane (16).

13. The part (28) of claim 11, wherein the original part (28) is a gas turbine engine casing the replacement feature (26) are a boss for a gas turbine engine casing.
